(19) Europäisches Patentamt
European Patent Office
Office européen des brevets

(11) **EP 4 700 336 A1**

(12) **EUROPEAN PATENT APPLICATION**
published in accordance with Art. 153(4) EPC

(43) Date of publication:
**25.02.2026 Bulletin 2026/09**

(21) Application number: **24792544.9**

(22) Date of filing: **08.04.2024**

(51) International Patent Classification (IPC):
**G01D 13/04** (2006.01)    **G01D 13/22** (2006.01)
**G08C 17/00** (2006.01)

(52) Cooperative Patent Classification (CPC):
**G01D 13/04; G01D 13/22; G08C 17/00**

(86) International application number:
**PCT/JP2024/014247**

(87) International publication number:
**WO 2024/219269 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023 JP 2023067785**

(71) Applicant: HOSIDEN CORPORATION
Yao-shi, Osaka 581-0071 (JP)

(72) Inventors:
• CHIN, Shinu
  Yao-shi, Osaka 581-0071 (JP)
• KONDO, Hayato
  Yao-shi, Osaka 581-0071 (JP)
• SATO, Eiji
  Yao-shi, Osaka 581-0071 (JP)

(74) Representative: LBP Lemcke, Brommer & Partner
Patentanwälte mbB
Siegfried-Kühn-Straße 4
76135 Karlsruhe (DE)

(54) **SENSOR DEVICE SYSTEM**

(57) A sensor device system includes a sensor device (D1) that is attached for use to a measuring instrument (G1) including a scale plate (G16), a shaft member (G17), a pointer (G14) and a magnet (G18), and that contactlessly acquires a measurement value measured by the measuring instrument (G1). The pointer (G14) has an axial portion attached to the shaft member (G17) and an indicating portion that extends radially outward from the axial portion and points to the scale as viewed in an axial direction (Z). The magnet (G18) has one each of an N pole and an S pole disposed in a circumferential direction of the shaft member (G17). The sensor device (D1) includes a sensor circuit (2) and a case (1) accommodating the sensor circuit (2). The sensor circuit (2) generates a magnetic pole boundary direction value by detecting a magnetic pole boundary direction parallel to an interface between the N pole and the S pole, and generates a meter reading value by correcting the magnetic pole boundary direction value with a correction value. The correction value is calculated based on an extension direction of the pointer (G14) and an angle formed by the magnetic pole boundary direction and a reference direction of the magnetic pole boundary direction.

Fig.4

EP 4 700 336 A1

## Description

Technical Field

The present disclosure relates to a sensor device system including a sensor device that contactlessly acquires measurement values measured by a measuring instrument.

Background Art

In recent years, automation has increased in assembly and inspection processes in manufacturing plants, and robots, for example, are being utilized in assembly and inspection apparatuses. There are robots that are provided with measuring instruments for monitoring the operating state. Meanwhile, the increasing number of measuring instruments used in manufacturing plants makes it desirable to simplify the task of monitoring measuring instruments. This has led to a growing demand for measuring instrument measuring devices with wireless capabilities that can remotely monitor the operating state of measuring instruments. Such measuring instrument measuring devices include that described in Patent Document 1 given as a source of reference below, for example.

Patent Document 1 describes an output system that is attached to a measuring instrument and functions to contactlessly detect the indicated value of a pointer of the measuring instrument and output this indicated value, and a (calibration) method for calibrating the output system. This output system includes a magnet that rotates together with the pointer, a plurality of magnetic sensors that detect the magnetic field of the magnet, an information generation section that generates indicated value information relating to the indicated value shown by the pointer based on the detection values of the magnetic sensors, and an output section that outputs the indicated value information.

Prior Art Documents

Patent Documents

Patent Document 1: JP 2020-183886A

Disclosure of the Invention

Problem to be Solved by the Invention

The output system described in Patent Document 1 generates data that associates meter reading values of the magnetic sensors in a steady state with initial installation information. However, in order to obtain this initial installation information, parameters for performing correction (calibration) need to be calculated by rotating the pointer and sequentially acquiring first and second meter reading values, and these parameters need to be stored. The output system described in Patent Document 1 thus requires rotating the pointer of the measuring instrument in order to correct the meter reading value and is troublesome.

In view of this, a sensor device system capable of correcting (calibrating) a meter reading value without rotating the pointer of a measuring instrument is desired.

Means for Solving Problem

The characteristic configuration of a sensor device system according to the present disclosure is a sensor device system including a sensor device attachable for use to a measuring instrument and configured to contactlessly acquire a measurement value measured by the measuring instrument, the measuring instrument including a scale plate marked with a scale, a shaft member that moves rotationally around an axis perpendicular to a plate face of the scale plate, a pointer that moves rotationally around the axis together with the shaft member and indicates the scale, and a magnet that moves rotationally around the axis together with the shaft member, the pointer including an axial portion attached to the shaft member and an indicating portion extending radially outward from the axial portion and pointing to the scale as viewed in an axial direction, the magnet having one each of an N pole and an S pole disposed in a circumferential direction of the shaft member, the sensor device including a sensor circuit and a case accommodating the sensor circuit, the sensor circuit generating a magnetic pole boundary direction value by detecting a magnetic pole boundary direction parallel to an interface between the N pole and the S pole, and generating a meter reading value by correcting the magnetic pole boundary direction value with a correction value, and the correction value being calculated based on an extension direction of the pointer and an angle formed by the magnetic pole boundary direction and a reference direction of the magnetic pole boundary direction.

With such a characteristic configuration, by correcting the magnetic pole boundary direction value with the correction value calculated based on the extension direction of the pointer of the measuring instrument and the angle formed by the magnetic pole boundary direction parallel to the interface of the N and S poles of the magnet and the reference direction of the magnetic pole boundary direction, the measurement value pointed to by the pointer of the measuring instrument can be aligned with the measurement value acquired by the sensor device. Accordingly, in the sensor device system, a correction value can be generated simply by detecting the magnetic pole boundary direction at any position of the pointer of the measuring instrument, and thus the meter reading value can be corrected, without rotationally moving the pointer of the measuring instrument.

Preferably, the sensor device further includes a wireless circuit having an antenna that transmits the meter reading value to a transceiver located separately from the sensor device, and the wireless circuit is capable of two-way wireless communication with the transceiver and is configured to receive a command from the transceiver to start correction with the correction value.

With such a configuration, there is no need to provide a functional section (e.g., switch) that uses a non-wireless method, such as a Hall element, for example, to start correction with a correction value. There is also no need to provide another wireless circuit to transmit the meter reading value to the transceiver, in order to correct the meter reading value. Accordingly, an increase in the cost of the sensor device system can be prevented.

Preferably, the wireless circuit performs transmission and reception based on an LPWA system.

With such a configuration, the wireless circuit can be driven with low power consumption.

Preferably, the sensor device system further includes a storage that stores the correction value.

With such a configuration, the meter reading value can be corrected with a correction value stored in the storage of the sensor device system, and thus a correction value can be easily acquired and a meter reading value corrected within the sensor device system can be generated. Furthermore, the correction value is stored in the storage, and thus the same correction value can also be utilized in subsequent correction.

Preferably, the sensor device further includes a battery section, the sensor circuit includes a sensor section that acquires position information indicating a position of the pointer, and the wireless circuit is equal in height to the sensor section in the axial direction.

With such a configuration, in the case of mounting the wireless circuit and the sensor section on the same surface of the substrate, for example, the mounting heights can be uniformized. This facilitates managing the mounting heights. Also, when mounting the wireless circuit and the sensor section on different surfaces of the substrate, the mounting heights on one surface of the substrate and the other surface of the substrate can be uniformized. This facilitates managing the mounting heights.

Alternatively, a configuration may be adopted in which the sensor device further includes a battery section, the sensor circuit includes a sensor section that acquires position information indicating a position of the pointer, and the wireless circuit is located between the sensor section and the battery section.

By disposing the wireless circuit in the space between the sensor section and the battery section, as in such a configuration, the sensor device can be made more compact.

Preferably, the scale is marked on the scale plate over a range exceeding 180 degrees centered on the shaft member, and the correction value is calculated using an arctangent function that takes two arguments.

An arctangent function that takes two arguments obtains an angle value included in a range from -180 degrees to 180 degrees, and thus the correction value can be properly calculated, even if the scale marked on the scale plate spans a range exceeding 180 degrees centered on the shaft member.

Brief Description of the Drawings

FIG. 1 is a perspective view showing a sensor device attached to a measuring instrument.
FIG. 2 is a perspective view showing the sensor device before being attached to the measuring instrument.
FIG. 3 is an exploded perspective view of the measuring instrument.
FIG. 4 is a cross-sectional view of the measuring instrument and the sensor device.
FIG. 5 is an exploded perspective view of the sensor device.
FIG. 6 is an assembly diagram of a body case and a substrate.
FIG. 7 is an assembly diagram of the body case and the substrate.
FIG. 8 is a flowchart showing processing related to storage of a correction value.
FIG. 9 shows the case where there is no deviation between a pointer and a magnetic pole boundary direction value.
FIG. 10 shows the case where there is a deviation in the magnetic pole boundary direction value.
FIG. 11 shows a measurement target being applied to the measuring instrument.
FIG. 12 is a flowchart showing processing related to storage of a correction value.

FIG. 13 is a flowchart showing processing of a sensor device system.
FIG. 14 is a flowchart showing processing of the sensor device system.

Best Mode for Carrying out the Invention

Hereinafter, a sensor device system of the present disclosure will be described. The sensor device system includes a sensor device and a storage. Note that the constituent elements of the embodiment described below can be combined with each other as long as are no inconsistencies therebetween. Also, the materials, shapes, dimensions, number, disposition, and the like of the constituent elements in the various modes of the embodiments described below are given as examples thereof, and design modifications can be freely made within a range that can achieve similar functions.

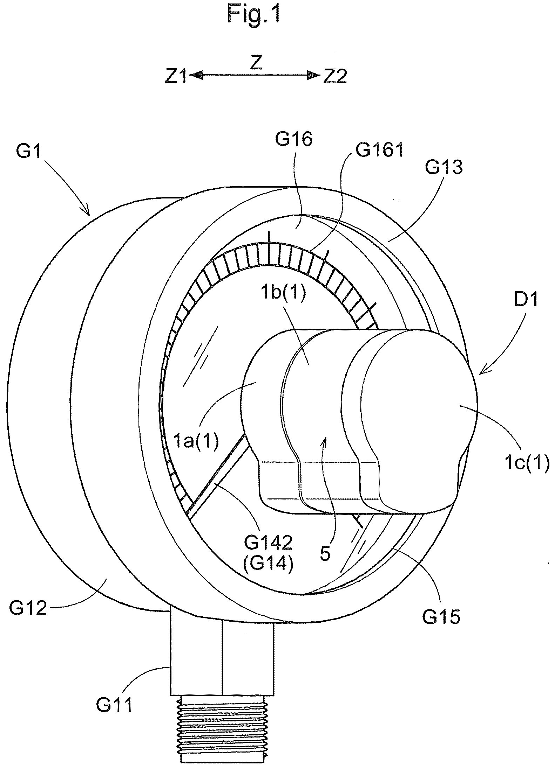

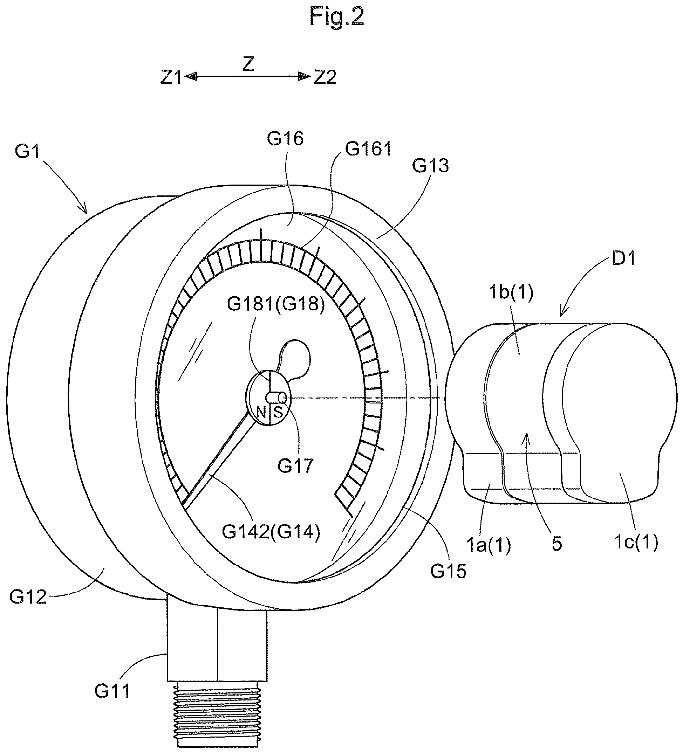

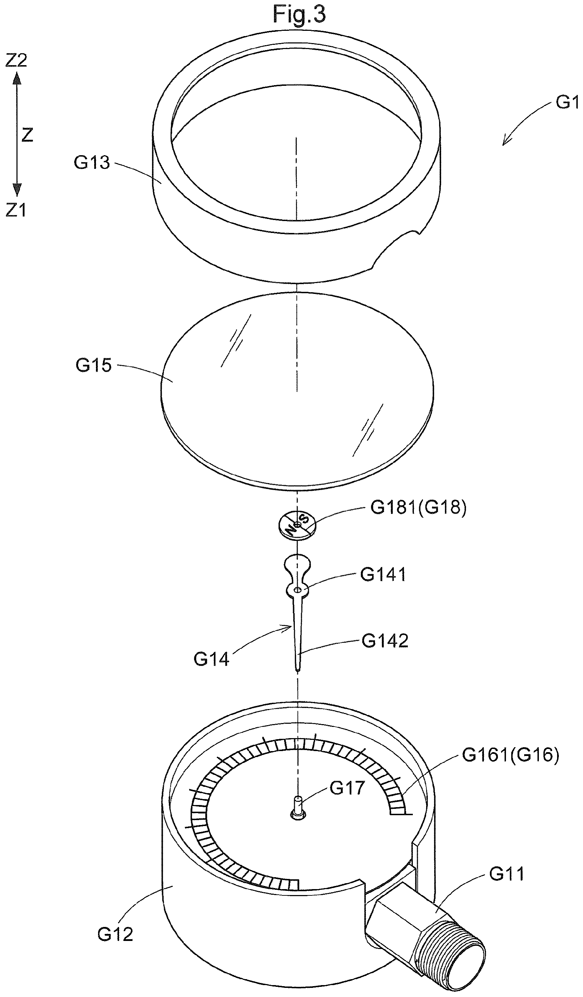

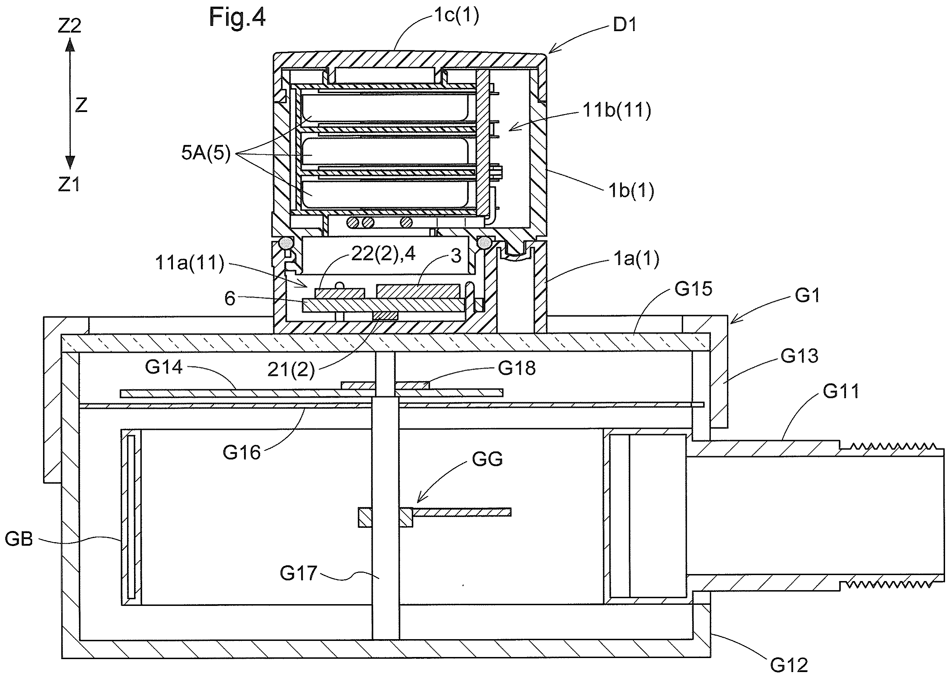

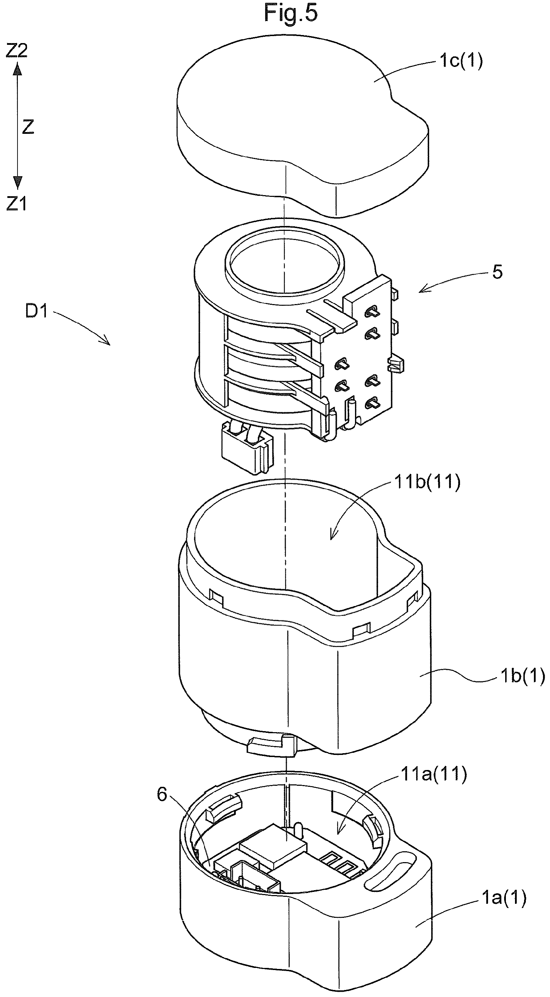

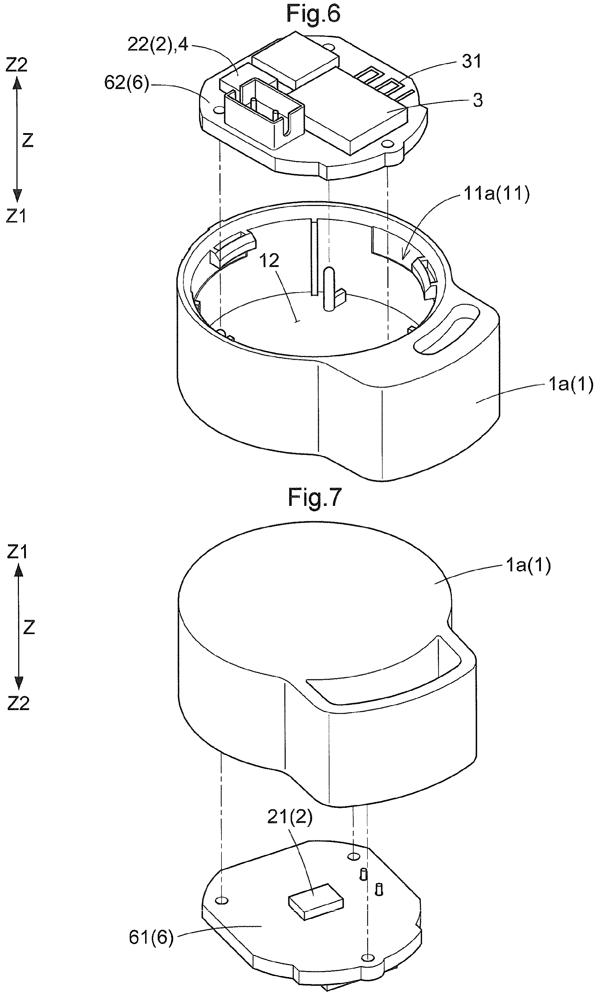

An example of a sensor device D1 will be described below with reference to FIGS. 1 to 7. FIG. 1 is a perspective view showing the sensor device D1 attached to a measuring instrument G1. FIG. 2 is a perspective view showing the sensor device D1 before being attached to the measuring instrument G1. FIG. 3 is an exploded perspective view of the measuring instrument G1. FIG. 4 is a cross-sectional view of the sensor device D1 and the measuring instrument G1. FIG. 5 is an exploded perspective view of the sensor device D1. FIGS. 6 and 7 are assembly diagrams of a body case 1a and a substrate 6.

Hereinafter, the direction parallel to the axis of a shaft member G17 (see FIG. 2) of the measuring instrument G1 will be referred to as an axial direction Z. Also, the one side in the axial direction will be referred to as a Z1 side in the axial direction Z (also referred to as "first side Z1"). Furthermore, the opposite side in the axial direction will be referred to as a Z2 side in the axial direction Z (also referred to as "second side Z2"). As shown in FIG. 1, the sensor device D1 is attached for use to the measuring instrument G1 in such a manner as to be stacked thereon in the axial direction Z. In the present embodiment, the sensor device D1 stacked on the measuring instrument G1 in the axial direction Z is attached on the second side Z2 of the measuring instrument G1.

As shown in FIGS. 2 and 3, the measuring instrument G1 is an analog measuring instrument with the shaft member G17 as a rotational axis. In the present embodiment, a pressure gauge is used as the measuring instrument G1.

As shown in FIGS. 2 to 4, the measuring instrument G1 includes a body G11, a case G12, an outer frame G13, a pointer G14, a transparent plate G15, a scale plate G16, the shaft member G17, and a magnet G18. The body G11 is accommodated in the case G12 together with the scale plate G16 and is disposed on the first side Z1 of the scale plate G16. The transparent plate G15 is encased in the outer frame G13 and disposed on the second side Z2 of the scale plate G16 at the same time that the outer frame G13 is incorporated into the case G12. The scale plate G16 has a scale G161 marked on the surface thereof on the second side Z2 in the axial direction Z. In the present embodiment, the scale G161 extends in the circumferential direction centered on the shaft member G17, in a radially outer area of the scale plate G16.

The shaft member G17 passes through the scale plate G16 in the axial direction Z. Also, the shaft member G17 moves rotationally around an axis perpendicular to the plate face of the scale plate G16, and the pointer G14 and the magnet G18 move rotationally around an axis parallel to the axial direction Z within the case G12. The plate face of the scale plate G16 is the surface of the scale plate G16 on which the scale G161 is marked. Accordingly, in the present embodiment, the axis perpendicular to the plate face of the scale plate G16 is parallel to the stacking direction of the sensor device D1 on the measuring instrument G1 with the sensor device D1 attached to the measuring instrument G1 in the present embodiment. The measuring instrument G1 is, for example, a Bourdon tube pressure gauge conforming to JIS 7505-1 "Aneroid pressure gauges - Part 1: Bourdon tube pressure gauges". A bourdon tube GB of the measuring instrument G1 and a gear mechanism GG coupled to the Bourdon tube GB are accommodated within the case G12.

Here, the pointer G14 is disposed on the second side Z2 of the scale plate G16. The pointer G14 has an axial portion G141 and an indicating portion G142 (see FIG. 3). The pointer G14 is attached to the shaft member G17 via the axial portion G141. Also, the pointer G14 extends radially outward from the axial portion G141, and, as shown in FIG. 2, the indicating portion G142 points to the scale G161 as viewed in the axial direction Z. Accordingly, the pointer G14 can move rotationally together with the shaft member G17 around the axis and indicate the scale G161.

The magnet G18 moves rotationally together with the shaft member G17 around the axis. In the present embodiment, the magnet G18 is magnetized in such a manner that one each of an N pole and an S pole is disposed in the circumferential direction of the shaft member G17 on the second side Z2 of the scale plate G16. The magnet G18 has a disk shape as viewed in the axial direction Z, and semicircular portions thereof are magnetized to respectively form the N pole and the S pole centered on the shaft member G17. The direction of a magnetic pole of an interface G181 between the opposing N and S poles is parallel to a plane perpendicular to the axis of the shaft member G17 extending in the axial direction Z (i.e., plane orthogonal to axis of shaft member G17). This perpendicular plane includes a substantially perpendicular plane. The measurement value of the measuring instrument G1 can thereby be recognized from the position (position information) that the indicating portion G142 of the pointer G14 that moves rotationally on the scale plate G16 is pointing to on the scale G161, and the magnetic pole boundary direction of the magnet G18 can be detected with the sensor device D1.

The attached sensor device D1 contactlessly acquires the measurement value measured by the measuring instrument G1. The measurement value measured by the measuring instrument G1 is a measurement result relating to equipment targeted for measurement by the measuring instrument G1. Contactlessly acquiring the measurement value of the measuring instrument G1 involves generating a magnetic pole boundary direction value (described later) by contactlessly detecting the magnetic pole boundary direction of the magnet G18, and generating a meter reading value by correcting the magnetic pole boundary direction value with a correction value (described later). Note that, in the present embodiment, "correcting with a correction value" means "calibrating with a calibration value".

As shown in FIGS. 5 to 7, the sensor device D1 includes a case 1, a sensor circuit 2, and a wireless circuit 3. The case 1 includes the body case 1a, a battery case 1b, and a lid 1c. The case 1 is provided with an accommodating space 11, and has a bottom 12 on the first side Z1 of a body accommodating space 11a of the accommodating space 11 inside the body case 1a (see FIG. 6). The case 1 may have a substantially cylindrical or substantially polygonal columnar outer shape. The case 1 may also have an outer shape that combines substantially cylindrical and substantially polygonal columnar shapes. The accommodating space 11 accommodates the sensor circuit 2, the wireless circuit 3, a storage 4, and a battery section 5.

The sensor circuit 2 has a sensor section 21 (e.g., magnetic sensor IC) and a sensor controller 22. The sensor section 21 is disposed facing the bottom 12 of the case 1 and acquires position information indicating the position of the pointer G14. It is possible to use a magnetic sensor, for example, for the sensor section 21. Magnetic sensing may be performed utilizing any of effects such as the Hall effect, the MR effect, and the MI effect. Position information indicating the position of the pointer G14 can thereby be acquired based on the result of detecting the magnetic pole boundary direction parallel to the interface G181 between the N and S poles.

As shown in FIG. 7, the sensor section 21 of the sensor circuit 2 is accommodated in the body accommodating space 11a inside the body case 1a. Also, as shown in FIG. 5, the substrate 6 is accommodated in the body accommodating space 11a. Also, as shown in FIG. 4, the battery section 5 is accommodated in a battery accommodating space 11b inside the battery case 1b. The battery section 5 is constituted by electrically connecting a plurality of button cells 5A and supplies power to the sensor circuit 2 and the wireless circuit 3.

The sensor circuit 2 generates a magnetic pole boundary direction value by detecting the magnetic pole boundary direction parallel to the interface G181 between the N and S poles of the magnet G18, and the sensor controller 22 generates a meter reading value by correcting the magnetic pole boundary direction value with a correction value. The magnetic pole boundary direction value is a value indicating the magnetic pole boundary direction (information indicating magnetic pole boundary direction), and corresponds to the difference between (angle formed by) a predetermined direction set in advance and the result of detecting the magnetic pole boundary direction, for example. The sensor section 21 generates such a magnetic pole boundary direction value and transmits the generated value to the sensor controller 22. The correction value is stored in the storage 4 described later. The meter reading value is the meter reading result corrected with the correction value. Accordingly, the sensor controller 22 corrects the result of detecting the magnetic pole boundary direction transmitted from the sensor section 21, based on the correction value stored in the storage 4 (described later) and generates the meter reading value.

The wireless circuit 3 is capable of two-way communication with a transceiver (not shown) located separately from the sensor device D1, and is capable of receiving a command from the transceiver to start correction with the correction value. The wireless circuit 3 is capable of performing transmission and reception based on an LPWA (Low-Power Wide-Area) system. Transmission and reception can thereby be performed with low power consumption.

The storage 4 stores the correction value. As the storage 4, a nonvolatile memory is preferred, in order to continuously store the correction value. The correction value can thereby be read out for use from the storage 4 next time correction is performed.

The wireless circuit 3 may be disposed at (substantially) the same height in the axial direction Z as the sensor section 21, or, as shown in FIG. 4, may be disposed between the sensor section 21 and the battery section 5 in the axial direction Z. In the example of FIG. 4, the wireless circuit 3 is disposed on the second side Z2 of the sensor section 21, and on the first side Z1 of the battery section 5 in the axial direction Z, and the sensor section 21, the wireless circuit 3, and the battery section 5 are stacked on each other in the axial direction Z inside the accommodating space 11.

As shown in FIGS. 6 and 7, the substrate 6 has a first surface 61 on the first side Z1 in the axial direction Z and a second surface 62 on the second side Z2 in the axial direction Z. The sensor section 21 of the sensor circuit 2 is mounted on the first surface 61, and the sensor controller 22 of the sensor circuit 2, the wireless circuit 3, and the storage 4 are mounted on the second surface 62. The wireless circuit 3 has an antenna 31 that transmits the meter reading value generated by the sensor circuit 2 to the transceiver (not shown). The antenna 31 may be patterned on the second surface 62 or may be formed inside a wireless IC (example of wireless circuit 3) to be mounted.

The substrate 6 may be a rigid substrate or a flexible substrate. Also, the substrate 6 may be a double-sided substrate (two-layer substrate) having two layers constituted by the first surface 61 and the second surface 62 (i.e., two layers constituted by a pattern on first surface 61 side and a pattern on second surface 62 side), or may be a multilayer substrate having three or more layers with a layer (inner layer) between the first surface 61 and the second surface 62, and may be fixedly supported by the case 1.

The sensor device D1 can be formed to explosion-proof specifications. Explosion-proof specifications are specifications stipulated in order to prevent the sensor device D from becoming an ignition source of combustible material (e.g., gas, dust, etc.) present outside the sensor device D1. Such explosion-proof specifications include extending the insulation distance by spacing adjacent members from each other in spaces or on component surfaces where potential differences occur, applying a resin material such as a potting agent to target members, and over-molding such that the inside of the case 1 is sealed by a resin material.

Note that the measuring instrument G1 to which the sensor device D1 is attached is not limited to being a pressure gauge, and may also be a compound gauge, a vacuum gauge, a voltmeter, an ammeter, a wattmeter, watthour meter, and the like. A flowmeter and the like can also be utilized.

Next, acquisition of a correction value will be described. The sensor device D1 acquires a correction value for generating a meter reading value by correcting the magnetic pole boundary direction value, and, as described above, generates the meter reading value by correcting the magnetic pole boundary direction value with the acquired correction value, and this correction value can be used to calibrate the sensor device D1.

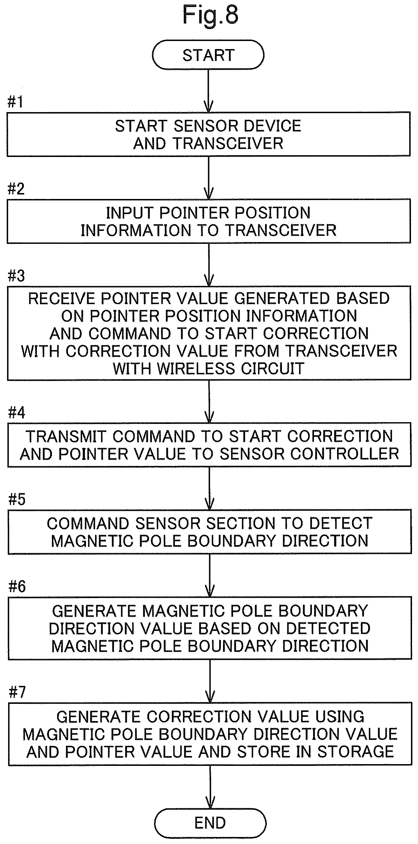

FIG. 8 shows processing in the case of acquiring position information (hereinafter, "pointer position information") indicating the position of the pointer G14 through visual inspection of the pointer position of the measuring instrument G1. In this case, as shown in FIG. 8, first, the sensor device D1 and the transceiver are started (step #1). The start instructions in step #1 are manually given by the user. Next, the pointer position information is input to the transceiver (step #2). The input in step #2 is also carried out manually by the user.

In the transceiver, a pointer value is generated based on the pointer position information (step #3), and a command to start correction (calibration) with the correction value is transmitted from the transceiver together with the pointer value. The wireless circuit 3 receives the command and the pointer value from the transceiver (step #3). The series of processing in step #3 is performed automatically.

The wireless circuit 3 transmits the command to start correction (calibration) with the correction value and the pointer value from the transceiver to the sensor controller 22 (step #4). This transmission of the command and the pointer value is performed automatically. The sensor controller 22 commands the sensor section 21 to detect the magnetic pole boundary direction (step #5). This command is given automatically.

The sensor section 21 generates a magnetic pole boundary value based on the detected magnetic pole boundary direction (step #6). This generation of the magnetic pole boundary direction value is performed automatically. The sensor controller 22 generates a correction value with the magnetic pole boundary direction value and the pointer value, and stores the correction value in the storage 4 (step #7). This correction value is calculated based on the extension direction of the pointer G14 and the angle formed by the magnetic pole boundary direction and a reference direction of the magnetic pole boundary direction. The generation and storage of the correction value are performed automatically. The sensor device D1 acquires the correction value in the above manner.

In the above processing, the output of the sensor section 21 can be a voltage value with respect to a change in the magnetic field generated by the magnet G18 that moves rotationally together with the pointer G14. The sensor controller 22 may convert the analog voltage value output by the sensor section 21 into a digital voltage value. The pointer position information may be a measurement value that can be acquired through visual inspection of the position that the indicating portion G142 of the pointer G14 is pointing to on the scale G161, or may be the value of the angle formed by the pointer direction when the pointer G14 is at the reference position and the direction of the pointer G14 during calibration. The reference position may be when the pointer G14 is located at a position indicating the minimum measurement value of the measuring instrument G1, or when the pointer G14 is located at a position indicating the maximum measurement value of the measuring instrument G1. Any other position can also be set as the reference position.

Other Embodiments

The sensor device D1 may be configured to transmit the meter reading value to the transceiver together with information indicating whether the meter reading value has been corrected with a correction value during normal operation of the equipment targeted for measurement. The time to transmit the information indicating whether the meter reading value has been corrected with a correction value during operation together with the meter reading value and the time to stop transmitting the information indicating whether the meter reading value has been corrected with a correction value together with the meter reading value can also be freely set. The transceiver can also be configured to transmit a command to start calibration, and to store a correction value in the storage 4, in response to the meter reading value having not been corrected with a correction value. Whether or not the meter reading value has been corrected with a correction value may be determined based on whether a correction value is stored in the storage 4.

Also, the sensor device D1, rather than the transceiver, can be configured to determine whether the meter reading value has been corrected with a correction value.

Instead of acquiring the position that the indicating portion G142 of the pointer G14 is pointing to on the scale G161 through visual inspection by the user, a corrected meter reading value stored in the transceiver can be used as the pointer position information.

The sensor device D1 may include a power switch that switches power supply for driving the sensor circuit 2 and the wireless circuit 3 on and off. This power switch may be a switch (e.g. remote control switch, etc.) that can be operated without touching the sensor device D1.

The storage 4 may be provided in the transceiver rather than in the sensor device D1. The storage 4 may also be provided in both the sensor device D1 and the transceiver.

Technical Features and Effects

The sensor device D1 constituted as described above and the correction method (calibration method) of the sensor device D1 exhibit the following technical features and effects.

(1) First Technical Feature and Effect

The sensor section 21 of the sensor device D1 is able to generate a correction value by simply detecting the magnetic pole boundary direction at any one position (one state) of the pointer G14, and thus the pointer G14 need not be moved rotationally in order to detect the magnetic pole boundary direction at multiple positions (multiple states) of the pointer G14. Accordingly, correction (calibration) can be performed, regardless of whether or not the equipment targeted for measurement to which the measuring instrument G1 is attached is operating.

Also, when the magnet G18 is incorporated into the measuring instrument G1 and fixed to the shaft member G17, for example, variability in the angle formed by the pointer direction of the pointer G14 fixed to the shaft member G17 and the magnetic pole boundary direction of the magnet G18 could possibly arise. Variability in the angle formed by the pointer direction and the magnetic pole boundary direction leads to meter reading value error, and the sensor device D1 corrects this variability in each measuring instrument G1 through correction, thus enabling the effects of variability in the angle formed by the pointer direction and the magnetic pole boundary direction in the form of meter reading value error to be reduced. In terms of meter reading value error, the attachment tolerance of the sensor device D1 to the measuring instrument G1 also exerts an effect, and correcting the magnetic pole boundary direction after the magnet G18 has been assembled to the measuring instrument G1 by being fixed to the shaft member G17 is extremely troublesome. In some cases, it may also be necessary to replace the magnet G18 along with the pointer G14 and the shaft member G17. Also, once the sensor device D1 has been attached to the measuring instrument G1, the magnet G18 is hidden by the sensor device D1, preventing visual confirmation of the magnetic pole boundary direction, and thus it is not possible to determine whether the magnetic pole boundary direction needs correcting. However, with the sensor device D1, it can be easily determined whether the attachment direction of the sensor device D1 needs correcting. Meter reading value error due to the effects of the mounting tolerance of the sensor section 21 to the substrate 6 and individual differences between sensor sections 21 constituted using a magnetic sensor IC is smaller than the meter reading value error when the maximum angle formed by the pointer direction and the magnetic pole boundary direction is 180 degrees. Accordingly, calibration to correct variability of the pointer direction and the magnetic pole boundary direction is the most effective way to reduce error and increase the accuracy of the meter reading value.

Also, in the case where the measuring instrument G1 is a pressure gauge and the sensor section 21 is a magnetic sensor IC, the meter reading value is convertible into the same measurement information as the measurement value with a sensor-specific value. Generation of the sensor-specific value is possible by, for example, attaching the sensor device D1 to the pressure gauge, acquiring the magnetic pole boundary direction value with the magnetic pole boundary direction pointing to the position of the minimum value of the scale plate G16 and the magnetic pole boundary direction value with the magnetic pole boundary direction pointing to the position of the maximum value of the scale plate G16, and then generating the sensor-specific value based on the correlation between the magnetic pole boundary direction values and the magnetic pole boundary direction. The sensor-specific value can be shared between sensor device systems that use pressure gauges of the same model number and magnetic sensor ICs of the same model number.

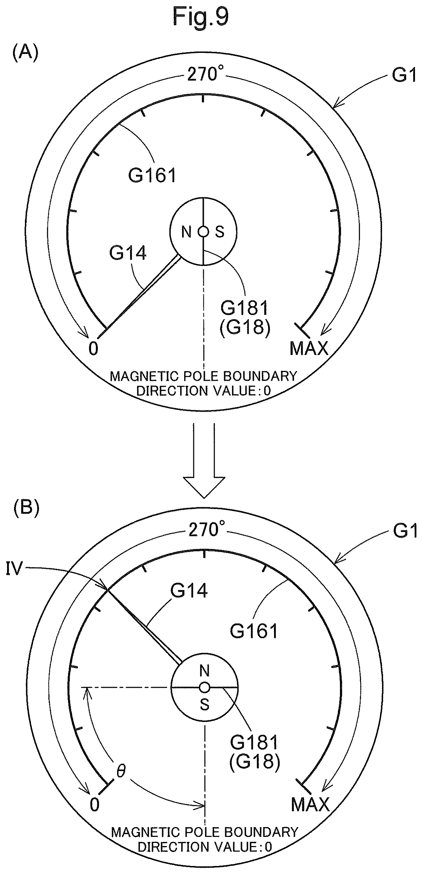

For example, in the case where the sensor device D1 is attached to a measuring instrument G1 having a scale G161 with a range of approximately 270 degrees, the state shown in (A) of FIG. 9 is defined as the pointer value indicated by the pointer G14 being 0 and the magnetic pole boundary direction value being 0 (difference between (angle formed by) predetermined direction set in advance and result of detecting magnetic pole boundary direction = 0). In this case, as shown in (B) of FIG. 9, when the pointer G14 moves rotationally, the interface G181 also moves rotationally. At this time, a pointer value IV is calculated by the following equation.

[Equation 1]

$$IV = \frac{MAX - MIN}{270^{\circ}} \times \theta \qquad \cdots (1)$$

Here, MAX is the maximum pointer value that the pointer G14 can take, and MIN is the minimum pointer value (0 in present embodiment) can the pointer G14 can take. Also, $\theta$ is the angle value of the interface G181 (i.e., angle of rotation from direction in which magnetic pole boundary direction value = 0).

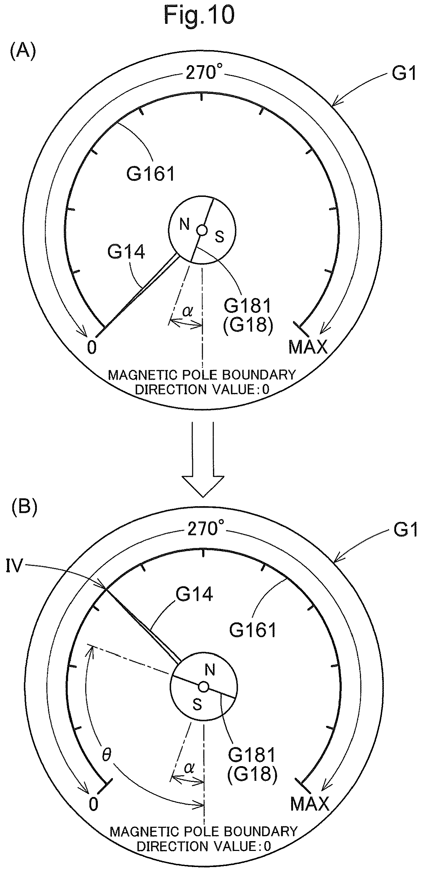

Here, in the case where the sensor device D1 is attached to the measuring instrument G1 having a scale G161 with a range of approximately 270 degrees, the magnetic pole boundary direction value may deviate by $\alpha$ with respect to a predetermined direction set in advance (difference between (angle formed by) predetermined direction set in advance and result of detecting magnetic pole boundary direction $\neq 0$), even when the pointer value indicated by the pointer G14 is 0, for example, as shown in (A) of FIG. 10. In this case, the inclination of the magnet G18 needs to be corrected by $\alpha$. In other words, in this case, the correction value is $\alpha$. As shown in (B) of FIG. 10, when the pointer G14 moves rotationally, the interface G181 also moves rotationally. The pointer value IV is calculated by the following equation.

[Equation 2]

$$IV = \frac{MAX - MIN}{270^{\circ}} \times (\theta - \alpha) \qquad \cdot \cdot \cdot (2)$$

Here, MAX is the maximum pointer value that the pointer G14 can take, and $\theta$ is the angle value of the interface G181 (i.e., angle of rotation from direction in which magnetic pole boundary direction value = 0). MIN is the minimum pointer value that the pointer G14 can take (0 in present embodiment). The correction value $\alpha$ can be calculated using the detection result of the sensor section 21 while the pressure to be measured is not being applied to the measuring instrument G1, for example.

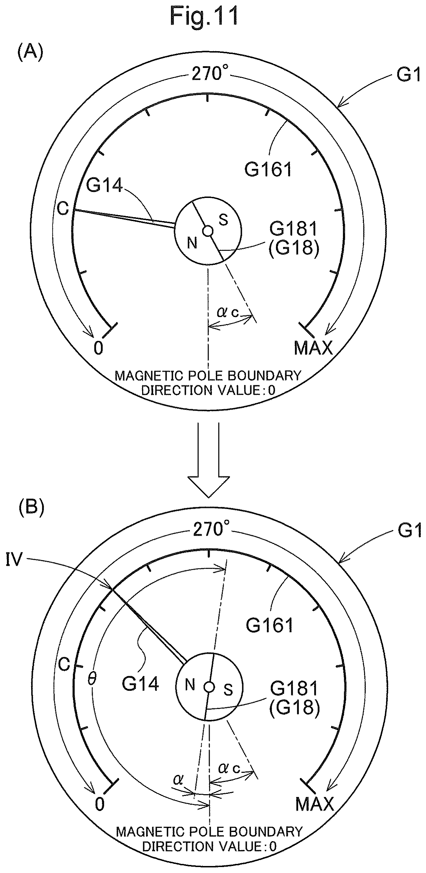

There are also cases where the sensor device D1 is attached to a measuring instrument G1 having a scale G161 with a range of approximately 270 degrees in which the pointer value indicated by the pointer G14 is not 0 (e.g., pressure to be measured is being applied to measuring instrument G1). Such a state is shown in (A) of FIG. 11. The sensor device system can also calculate the pointer value indicated by the pointer G14 in such a state. In this case, first the correction value $\alpha$ is calculated by the following equation.

[Equation 3]

$$\alpha = \alpha c - \frac{270^{\circ}}{MAX - MIN} \times (C - MIN) \qquad \cdot \cdot \cdot (3)$$

Here, MAX is the maximum pointer value that the pointer G14 can take, MIN is the minimum pointer value that the pointer G14 can take (0 in present embodiment), and C is the current pointer value. Also, $\alpha c$ is the value of the angle of the interface G181 relative to the reference direction of the magnetic pole boundary direction at the pointer value C (i.e., angle formed by magnetic pole boundary direction and reference direction of magnetic pole boundary direction).

Next, the angle value $\theta$ is calculated based on the angle value $\alpha c$. In this case, the pointer value IV is calculated by the following equations (see (B) in FIG. 11).

[Equation 4]

$$IV = \frac{MAX - MIN}{270^{\circ}} \times (\theta - \alpha c) + C \qquad \cdot \cdot \cdot (4)$$

[Equation 5]

$$IV = \frac{MAX - MIN}{270^{\circ}} \times (\theta - \alpha) + MIN \qquad \cdot \cdot \cdot (5)$$

In this way, the position (current pointer value IV) of the pointer G14 can be corrected based on the inclination of the magnet G18 (angle value of interface G181), while the pressure to be measured is being applied to the measuring instrument G1, for example.

(2) Second Technical Feature and Effect

The wireless circuit 3 is capable of two-way wireless communication with the transceiver and is able to receive a command from the transceiver to start correction with a correction value, and thus a wireless circuit other than the wireless circuit 3 that transmits the meter reading value to the transceiver, or a switch for giving a command to start correction contactlessly by a non-wireless method, such as using a Hall element, for example, are not needed in order to start execution of calibration contactlessly.

(3) Third Technical Feature and Effect

The wireless circuit 3 performs transmission and reception based on an LPWA (Low-Power Wide-Area) system, and thus the wireless circuit 3 can be driven with low power consumption. Accordingly, the life of the battery section 5 (battery life) can be extended. Also, for example, in the case where a plurality of button cells 5A are used as the battery section 5, not only can the battery replacement period be extended, but it is also possible to avoid a situation where the entire system including the factory or equipment operating outdoors is shut down due to incorrectly recognizing or not being able to recognize the meter reading result of the measuring instrument G1, due to the age of the battery section 5.

Also, utilization of LPWA enables the distance between the sensor device D1 and the transceiver to be extended compared to the case of utilizing WiFi (registered trademark) or Bluetooth (registered trademark), and it is thus possible to manage the meter reading values of devices operating in different buildings and to avoid their respective transmission statuses being affected by factors such as interference with WiFi or Bluetooth used in the same installation area.

(4) Fourth Technical Feature and Effect

The sensor device D1 includes the storage 4 that stores the correction value, and generation of the meter reading value by correcting the magnetic pole boundary direction value can be performed within the sensor device D1, thus enabling processing for collecting data to be simplified. This is because storage of correction values for every sensor device D1, and processing for mapping meter reading values transmitted from the sensor devices D1 to correction values acquired by the sensor devices D1 that transmitted the meter reading values in order to select from among the correction values stored for every sensor device D1 and processing for selecting from those correction values no longer needs to be performed by a gateway (example of transceiver).

(5) Fifth Technical Feature and Effect

The wireless circuit 3 is (approximately) the same height in the axial direction Z as the sensor section 21. The sensor section 21, the wireless circuit 3, and the battery section 5 can thereby be stacked on each other, thus enabling the projected area on a plane substantially perpendicular to the axial direction Z of the sensor device D1 to be reduced. Stacking of the wireless circuit 3 is possible in the case of utilizing LPWA that uses a sub-gigahertz band, for example, because wireless communication with the transceiver is less likely to be affected by the battery section 5 than in the case of utilizing a wireless system that uses a gigahertz band.

(6) Sixth Technical Feature and Effect

The wireless circuit 3 is located between the sensor section 21 and the battery section 5, thus enabling the projected area on a plane substantially perpendicular to the axial direction of the sensor device D1 to be reduced. Stacking of the wireless circuit 3 is possible in the case of utilizing LPWA that uses a sub-gigahertz band, for example, because wireless communication with the transceiver is less likely to be affected by the battery section 5 than in the case of utilizing a wireless system that uses a gigahertz band.

(7) Seventh Technical Feature and Effect

An arctangent function (y=atan(x)) that takes one argument is conceivably used, when calculating the difference between the predetermined direction set in advance and the result of detecting the magnetic pole boundary direction as the magnetic pole boundary direction value. However, y in y=atan(x) can only take a value included in a range of -90 degrees to 90 degrees, and thus the above-mentioned angle cannot be properly calculated with a Bourdon tube pressure gauge conforming to JIS 7505-1 "Aneroid pressure gauges - Part 1: Bourdon tube pressure gauges" having a scale with a range of approximately 270 degrees.

In view of this, in the sensor device system, an arctangent function (y=atan2(y,x)) that takes two arguments and is capable of taking a value included in a range of -180 degrees to 180 degrees is used as the value of y. The abovementioned angle can thereby be properly calculated with a Bourdon tube pressure gauge having a scale G161 with a range of approximately 270 degrees.

It is possible to use a 2-axis magnetic sensor IC that outputs four signals (+sin, -sin, +cos, -cos) for the sensor section 21. When such a magnetic sensor IC is used as the sensor section 21, four voltage values indicated by Equations (6) to (9) are obtained from the sensor section 21.

[Equation 6]

$$V1 = RA + A \times sin\,\theta \qquad \cdot\cdot\cdot(6)$$

[Equation 7]

$$V2 = RA - A \times sin\,\theta \qquad \cdot\cdot\cdot(7)$$

[Equation 8]

$$V3 = RB + A \times cos\,\theta \qquad \cdot\cdot\cdot(8)$$

[Equation 9]

$$V4 = RB - A \times cos\,\theta \qquad \cdot\cdot\cdot(9)$$

Here, RA and RB are variables or constants, and A is the average amplitude value of the output of the magnetic sensor IC. RA and RB may be the same value or may be different values.

The magnetic pole boundary direction value can be calculated by substituting the four voltage values shown in Equations (6) to (9) into Equation (10) to calculate $\theta$.

[Equation 10]

$$\theta = atan\,2\big((V1-V2),(V3-V4)\big) \qquad \cdot\cdot\cdot(10)$$

Here, atan2 is an arctangent function that takes two arguments.

Similarly, $\theta$org can be calculated by substituting a sensor-specific value into Equation (10). Since the correction value can be generated by comparing $\theta$ with $\theta$org, the sensor device D1 can include a single magnetic sensor IC.

In this way, $\theta$ is calculated in a range of 360 degrees, by calculating the abovementioned angle using the arctangent function (y=atan2(y,x)) shown in Equation (10) that takes two arguments. In the case where the measuring instrument G1 is a Bourdon tube pressure gauge conforming to JIS 7505-1 "Aneroid pressure gauges - Part 1: Bourdon tube pressure gauges", the range of the scale (distribution from minimum value to maximum value) is approximately 270 degrees, and thus the magnetic pole boundary direction can be detected by calculating $\theta$. Accordingly, the difference between the calculated $\theta$ and $\theta$ (e.g., $\theta$ may be 0) related to the predetermined direction set in advance will be the correction value.

The correction value of the measuring instrument G1 having a scale with a range of approximately 270 degrees can be properly calculated, by calculating the correction value using such an arctangent function that takes two arguments.

(8) Eighth Technical Feature and Effect

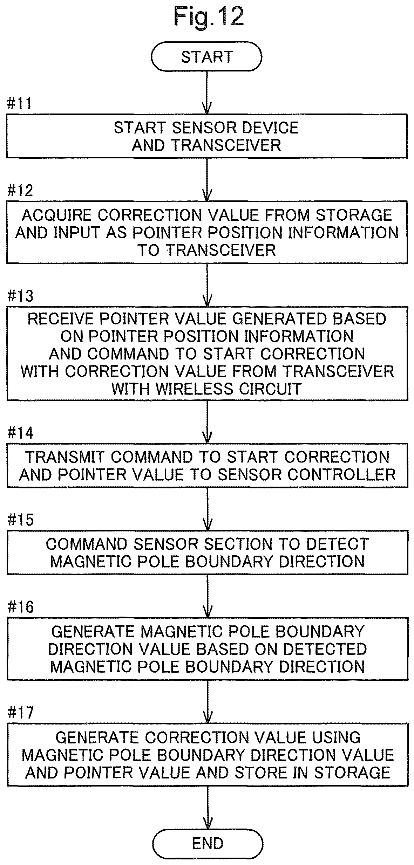

FIG. 12 shows processing in the case of using a correction value as pointer position information. In this case, first, the sensor device D1 and the transceiver are started (step #11). The processing in step #11 is carried out manually by the user. In this case, the equipment targeted for measurement may or may not be operating. Next, a corrected correction value is acquired from the storage 4 and input to the transceiver as pointer position information (step #12). The input in step #12 is also carried out manually by the user.

In the transceiver, a pointer value is generated based on the pointer position information (step #13), and a command to start correction (calibration) with the correction value is transmitted from the transceiver together with the pointer value. The wireless circuit 3 receives the command and the pointer value from the transceiver (step #13). The series of operations in step #13 is performed automatically.

The wireless circuit 3 transmits the command to start correction (calibration) with the correction value and the pointer value received from the transceiver to the sensor controller 22 (step #14). This transmission of the command and the pointer value is performed automatically. The sensor controller 22 commands the sensor section 21 to detect the magnetic pole boundary direction (step #15). This command is given automatically.

The sensor section 21 generates a magnetic pole boundary direction value based on the detected magnetic pole boundary direction (step #16). This generation of the magnetic pole boundary direction value is performed automatically. The sensor controller 22 generates a correction value using the magnetic pole boundary direction value and the pointer value and stores the correction value in the storage 4 (step #17). The generation and storage of the correction value are performed automatically. The above processing enables the correction value can be used as pointer position information.

(9) Ninth Technical Feature and Effect

The sensor device D1 is able to transmit the meter reading value to the transceiver together information indicating whether the meter reading value has been corrected with a correction value during normal operation of the equipment targeted for measurement, and thus the transceiver can perform a measuring instrument meter reading flow that involves determining whether the meter reading value has been corrected with a correction value and sending a command to start calibration for generating a correction value if the meter reading value has not been corrected. Also, the time to transmit the information indicating whether the meter reading value has been corrected with a correction value during operation together with the meter reading value and the time to stop transmitting the information indicating whether the meter reading value has been corrected with a correction value together with the meter reading value can be freely set, and thus the interval in which the determination of whether the meter reading value has been corrected with a correction value is stopped can be incorporated into the measuring instrument meter reading flow (processing) performed during normal operation of the equipment targeted for measurement.

The information indicating whether the meter reading value has been corrected with a correction value can be taken as information indicating whether a correction value is stored in the storage 4.

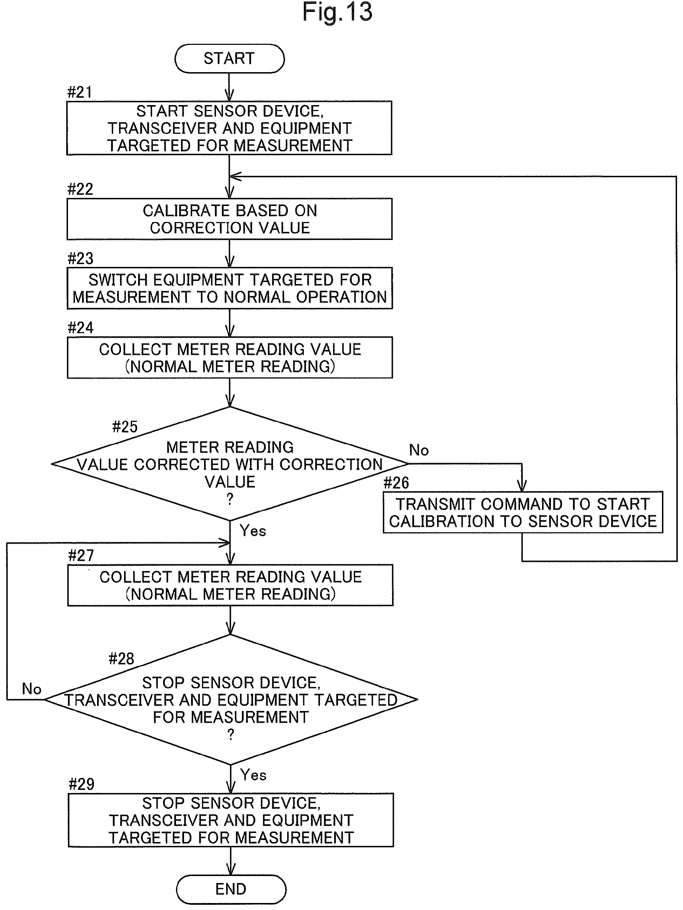

A configuration can also be adopted to start correction if it is determined that the meter reading value has not been corrected with a correction value, in the case where the determination of whether the meter reading value has been corrected with a correction value is not performed in the transmitter, and the sensor device D1 does not receive a command to start correction from the transceiver. Such processing is shown in FIG. 13.

First, the sensor device D1, the transceiver, and the equipment targeted for measurement are started (step #21). Next, a corrected correction value is acquired from the storage 4, and calibration is performed based on the acquired correction value (step #22).

After calibration, the equipment targeted for measurement is switched to normal operation (step #23). The transceiver collects a meter reading value (step #24). This corresponds to normal meter reading.

If the collected meter reading value has not been corrected with a correction value (step #25: No), a command to start calibration is transmitted to the sensor device D1 (step #26), and the flow returns to step #22 and calibration is performed based on the correction value (step #22). On the other hand, if the collected meter reading value has been corrected with a correction value (step #25: Yes), normal meter reading is continued (step #27). In the case of ending normal meter reading (step #28: Yes), the sensor device D1, the transceiver, and the equipment targeted for measurement are stopped (step #29). In the case of not ending normal meter reading (step #28: No), the flow returns to step #27 and the processing is continued.

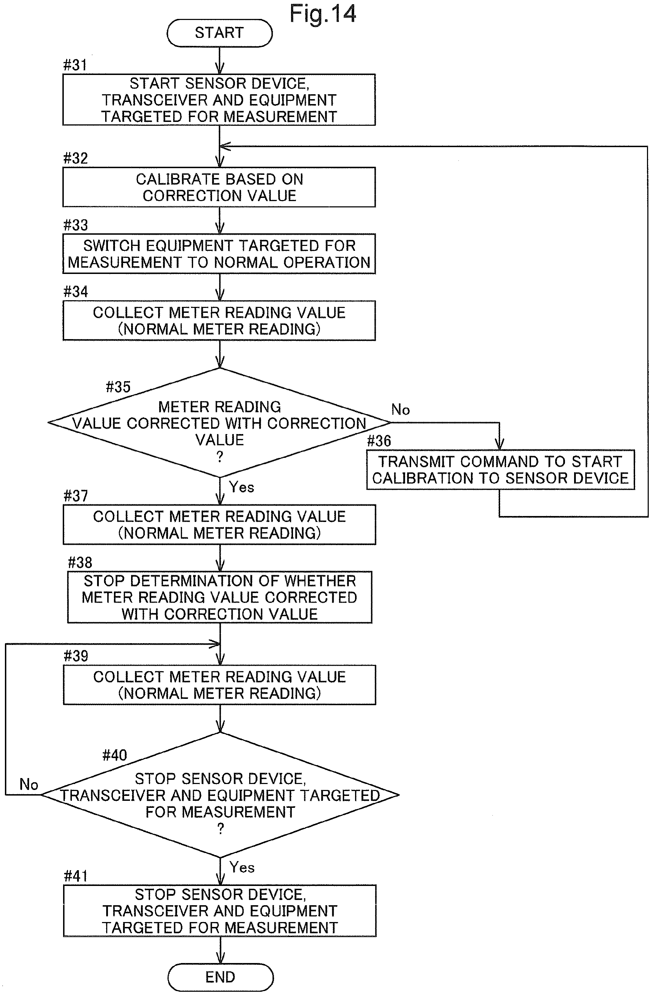

The processing of FIG. 13 can also be changed as shown in FIG. 14. For example, a configuration can be adopted in which, after step #27 in FIG. 13, determination of whether the meter reading value has been corrected with a correction value is stopped and normal meter reading is continued.

Specifically, first, the sensor device D1, the transceiver, and the equipment targeted for measurement are started (step #31). Next, a corrected correction value is acquired from the storage 4, and calibration is performed, based on the acquired correction value (step #32).

After calibration, the equipment targeted for measurement is switched to normal operation (step #33). The transceiver collects a meter reading value (step #34). This corresponds to normal meter reading.

If the collected meter reading value has not been corrected with a correction value (step #35: No), a command to start calibration is transmitted to the sensor device D1 (step #36), and the flow returns to #22 and calibration is performed based on the correction value (step #32). On the other hand, if the collected meter reading value has been corrected with a correction value (step #35: Yes), normal meter reading is continued (step #37).

Determination of whether the meter reading value has been corrected with a correction value is subsequently stopped (step #38). Thereafter, normal meter reading is continued (step #39). In the case of ending normal meter reading (step #40: Yes), the sensor device D1, the transceiver, and the equipment targeted for measurement are stopped (step #41). In the case of not ending normal meter reading (step #40: No), the flow returns to step #39 and the processing is continued.

(10) Tenth Technical Feature and Effect

For example, in the case where the measuring instrument G1 is a pressure gauge, the sensor section 21 is a magnetic sensor IC, and the equipment targeted for measurement operates while maintaining the pressure to be measured at a constant value, a corrected meter reading value stored in the transceiver can be used as the pointer position information, rather than acquiring a meter reading value through visual inspection of the position that the indicating portion G142 of the pointer G14 is pointing to on the scale G161. Calibration after the sensor device D1 is replaced during maintenance can thereby be skipped.

(11) Eleventh Technical Feature and Effect

The sensor device D1 can also be configured to contactlessly open and close the power switch for driving the sensor circuit 2 and the wireless circuit 3. In this case, a mechanism switch that could possibly generate sparks when the contacts of the power switch are opened or closed is not used to start correction, thus enabling the sensor device D1 to be used in an explosion-proof area.

(12) Twelfth Technical Feature and Effect

The storage 4 may be provided in the transceiver, instead of the sensor device D1. In this case, the substrate 6 need not be provided with a mounting space for mounting the storage 4 or a pattern wiring space for connecting to the storage 4, thus enabling the sensor device D1 to be made more compact. Also, if the storage 4 is provided in both the sensor device D1 and the transceiver, the correction value is also stored in the transceiver at the same time as being stored in the sensor device D1, and thus post-maintenance calibration of the sensor device D1 can be omitted.

Industrial Applicability

The present disclosure can be utilized in sensor device systems provided with a sensor device that contactlessly acquires measurement values measured by a measuring instrument attached to a device installed for operation in factories, plants, and the like.

Description of Reference Signs

| | |
|---|---|
| 1 | Case |
| 2 | Sensor circuit |
| 3 | Wireless circuit |
| 4 | Storage |
| 5 | Battery section |
| 21 | Sensor section |
| 31 | Antenna |
| D1 | Sensor device |
| G1 | Measuring instrument |
| G14 | Pointer |
| G16 | Scale plate |
| G17 | Shaft member |
| G18 | Magnet |
| G141 | Axis |
| G142 | Indicating portion |
| G161 | Scale |
| G181 | Interface |
| Z | Axial direction |

**Claims**

1. A sensor device system comprising:

a sensor device attachable for use to a measuring instrument and configured to contactlessly acquire a measurement value measured by the measuring instrument,
the measuring instrument including

a scale plate marked with a scale;
a shaft member that moves rotationally around an axis perpendicular to a plate face of the scale plate;
a pointer that moves rotationally around the axis together with the shaft member and indicates the scale; and
a magnet that moves rotationally around the axis together with the shaft member,

the pointer including

an axial portion attached to the shaft member; and
an indicating portion extending radially outward from the axial portion and pointing to the scale as viewed in an axial direction,

the magnet having one each of an N pole and an S pole disposed in a circumferential direction of the shaft member,
the sensor device including

a sensor circuit; and
a case accommodating the sensor circuit,

the sensor circuit generating a magnetic pole boundary direction value by detecting a magnetic pole boundary direction parallel to an interface between the N pole and the S pole, and generating a meter reading value by correcting the magnetic pole boundary direction value with a correction value, and
the correction value being calculated based on an extension direction of the pointer and an angle formed by the magnetic pole boundary direction and a reference direction of the magnetic pole boundary direction.

2. The sensor device system according to claim 1,

wherein the sensor device further includes a wireless circuit having an antenna that transmits the meter reading value to a transceiver located separately from the sensor device, and
the wireless circuit is capable of two-way wireless communication with the transceiver, and is configured to receive a command from the transceiver to start correction with the correction value.

3. The sensor device system according to claim 2,
wherein the wireless circuit performs transmission and reception based on an LPWA system.

4. The sensor device system according to any one of claims 1 to 3, further comprising a storage that stores the correction value.

5. The sensor device system according to claims 2 or 3,

wherein the sensor device further includes a battery section,
the sensor circuit includes a sensor section that acquires position information indicating a position of the pointer, and
the wireless circuit is equal in height to the sensor section in the axial direction.

6. The sensor device system according to claims 2 or 3,

wherein the sensor device further includes a battery section,
the sensor circuit includes a sensor section that acquires position information indicating a position of the pointer, and
the wireless circuit is located between the sensor section and the battery section.

7. The sensor device system according to any one of claims 1 to 3,

wherein the scale is marked on the scale plate over a range exceeding 180 degrees centered on the shaft member, and
the correction value is calculated using an arctangent function that takes two arguments.

# Fig.1

## Fig.2

## Fig.3

Z2

Z

Z1

G13

G15

G181(G18)

G141

G14

G142

G1

G161(G16)

G17

G11

G12

Fig.4

EP 4 700 336 A1

## Fig.5

## Fig.6

22(2),4
62(6)
31
3
11a(11)
12
1a(1)

Z2
Z
Z1

## Fig.7

1a(1)
21(2)
61(6)

Z1
Z
Z2

# Fig.8

```
            ( START )
                |
#1              v
+--------------------------------------+
|         START SENSOR DEVICE          |
|         AND TRANSCEIVER              |
+--------------------------------------+
                |
#2              v
+--------------------------------------+
|         INPUT POINTER POSITION       |
|      INFORMATION TO TRANSCEIVER      |
+--------------------------------------+
                |
#3              v
+--------------------------------------+
|  RECEIVE POINTER VALUE GENERATED BASED|
|     ON POINTER POSITION INFORMATION  |
|    AND COMMAND TO START CORRECTION   |
| WITH CORRECTION VALUE FROM TRANSCEIVER|
|        WITH WIRELESS CIRCUIT         |
+--------------------------------------+
                |
#4              v
+--------------------------------------+
|  TRANSMIT COMMAND TO START CORRECTION|
| AND POINTER VALUE TO SENSOR CONTROLLER|
+--------------------------------------+
                |
#5              v
+--------------------------------------+
|    COMMAND SENSOR SECTION TO DETECT  |
|    MAGNETIC POLE BOUNDARY DIRECTION  |
+--------------------------------------+
                |
#6              v
+--------------------------------------+
|     GENERATE MAGNETIC POLE BOUNDARY  |
|     DIRECTION VALUE BASED ON DETECTED|
|     MAGNETIC POLE BOUNDARY DIRECTION |
+--------------------------------------+
                |
#7              v
+--------------------------------------+
|     GENERATE CORRECTION VALUE USING  |
| MAGNETIC POLE BOUNDARY DIRECTION VALUE|
| AND POINTER VALUE AND STORE IN STORAGE|
+--------------------------------------+
                |
                v
             ( END )
```

# Fig.9

(A)

270°

G1

G161

G14

N ⊙ S

G181
(G18)

0

MAX

MAGNETIC POLE BOUNDARY
DIRECTION VALUE : 0

(B)

270°

G1

IV

G14

G161

N
⊙
S

G181
(G18)

θ

0

MAX

MAGNETIC POLE BOUNDARY
DIRECTION VALUE : 0

# Fig.10

(A)

(B)

# Fig.11

(A)

270°

G1

G161

G14

C

S

N

G181
(G18)

αc

0

MAX

MAGNETIC POLE BOUNDARY
DIRECTION VALUE:0

(B)

270°

G1

IV

G161

G14

C

θ

N   S

G181
(G18)

α   αc

0

MAX

MAGNETIC POLE BOUNDARY
DIRECTION VALUE:0

# Fig.12

```
        ( START )
           │
           ▼
```

#11

| START SENSOR DEVICE AND TRANSCEIVER |

#12

| ACQUIRE CORRECTION VALUE FROM STORAGE AND INPUT AS POINTER POSITION INFORMATION TO TRANSCEIVER |

#13

| RECEIVE POINTER VALUE GENERATED BASED ON POINTER POSITION INFORMATION AND COMMAND TO START CORRECTION WITH CORRECTION VALUE FROM TRANSCEIVER WITH WIRELESS CIRCUIT |

#14

| TRANSMIT COMMAND TO START CORRECTION AND POINTER VALUE TO SENSOR CONTROLLER |

#15

| COMMAND SENSOR SECTION TO DETECT MAGNETIC POLE BOUNDARY DIRECTION |

#16

| GENERATE MAGNETIC POLE BOUNDARY DIRECTION VALUE BASED ON DETECTED MAGNETIC POLE BOUNDARY DIRECTION |

#17

| GENERATE CORRECTION VALUE USING MAGNETIC POLE BOUNDARY DIRECTION VALUE AND POINTER VALUE AND STORE IN STORAGE |

```
           │
           ▼
        ( END )
```

# Fig.13

```
                    START

#21
        START SENSOR DEVICE,
     TRANSCEIVER AND EQUIPMENT
     TARGETED FOR MEASUREMENT

#22
          CALIBRATE BASED ON
          CORRECTION VALUE

#23
     SWITCH EQUIPMENT TARGETED FOR
     MEASUREMENT TO NORMAL OPERATION

#24
     COLLECT METER READING VALUE
       (NORMAL METER READING)

#25
              METER READING                    No
     VALUE CORRECTED WITH CORRECTION    ─────────┐
               VALUE                        #26  │
                 ?                    TRANSMIT COMMAND TO START
                                      CALIBRATION TO SENSOR DEVICE
              Yes

#27
     COLLECT METER READING VALUE
       (NORMAL METER READING)

#28
              STOP SENSOR DEVICE,
   No  TRANSCEIVER AND EQUIPMENT TARGETED
              FOR MEASUREMENT
                   ?

                   Yes
#29
        STOP SENSOR DEVICE,
     TRANSCEIVER AND EQUIPMENT
     TARGETED FOR MEASUREMENT

                    END
```

## Fig.14

```
                    ( START )
                        │
#31  ┌──────────────────▼──────────────────┐
     │        START SENSOR DEVICE,          │
     │      TRANSCEIVER AND EQUIPMENT        │
     │      TARGETED FOR MEASUREMENT         │
     └──────────────────┬──────────────────┘
                        │◄────────────────────────────────┐
#32  ┌──────────────────▼──────────────────┐              │
     │          CALIBRATE BASED ON          │              │
     │           CORRECTION VALUE           │              │
     └──────────────────┬──────────────────┘              │
#33  ┌──────────────────▼──────────────────┐              │
     │     SWITCH EQUIPMENT TARGETED FOR     │              │
     │   MEASUREMENT TO NORMAL OPERATION     │              │
     └──────────────────┬──────────────────┘              │
#34  ┌──────────────────▼──────────────────┐              │
     │      COLLECT METER READING VALUE      │              │
     │        (NORMAL METER READING)         │              │
     └──────────────────┬──────────────────┘              │
                        │                                  │
#35               ◇──────────◇        No                    │
         METER READING                 ───────┐           │
    VALUE CORRECTED WITH CORRECTION            │           │
              VALUE              #36   ┌────────▼────────┐ │
                ?                      │ TRANSMIT COMMAND│ │
                        │Yes           │ TO START        │ │
                        │              │ CALIBRATION TO  │ │
                        │              │ SENSOR DEVICE   │─┘
                        │              └─────────────────┘
#37  ┌──────────────────▼──────────────────┐
     │      COLLECT METER READING VALUE      │
     │        (NORMAL METER READING)         │
     └──────────────────┬──────────────────┘
#38  ┌──────────────────▼──────────────────┐
     │  STOP DETERMINATION OF WHETHER        │
     │  METER READING VALUE CORRECTED        │
     │  WITH CORRECTION VALUE                │
     └──────────────────┬──────────────────┘
        ┌───────────────┤
#39  ┌──────────────────▼──────────────────┐
     │      COLLECT METER READING VALUE      │
     │        (NORMAL METER READING)         │
     └──────────────────┬──────────────────┘
                        │
#40               ◇──────────◇
         STOP SENSOR DEVICE,
    TRANSCEIVER AND EQUIPMENT TARGETED ─── No ──┐
         FOR MEASUREMENT                        │
                ?                               │
                        │Yes                     │
#41  ┌──────────────────▼──────────────────┐    │
     │        STOP SENSOR DEVICE,            │    │
     │      TRANSCEIVER AND EQUIPMENT        │    │
     │      TARGETED FOR MEASUREMENT         │    │
     └──────────────────┬──────────────────┘    │
                        │                         
                    (  END  )
```

**EP 4 700 336 A1**

## INTERNATIONAL SEARCH REPORT

| | International application No. |
|---|---|
| | **PCT/JP2024/014247** |

**A. CLASSIFICATION OF SUBJECT MATTER**

*G01D 13/04*(2006.01)i; *G01D 13/22*(2006.01)i; *G08C 17/00*(2006.01)i
FI:   G01D13/04 Z; G01D13/22 Z; G08C17/00 Z

According to International Patent Classification (IPC) or to both national classification and IPC

**B. FIELDS SEARCHED**

Minimum documentation searched (classification system followed by classification symbols)

G01D13/04; G01D13/22; G08C17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P, X | WO 2023/243057 A1 (KOBATA GAUGE MFG CO., LTD.) 21 December 2023 (2023-12-21) paragraphs [0001]-[0057], fig. 1-8 | 1, 4, 7 |
| A | WO 2017/195251 A1 (KOBATA GAUGE MFG CO., LTD.) 16 November 2017 (2017-11-16) entire text, all drawings | 1-7 |
| A | US 2009/0151619 A1 (MURRAY, Joseph William) 18 June 2009 (2009-06-18) entire text, all drawings | 1-7 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/014247**

| Patent document cited in search report | | | Publication date (day/month/year) | Patent family member(s) | | | Publication date (day/month/year) |
|---|---|---|---|---|---|---|---|
| WO | 2023/243057 | A1 | 21 December 2023 | (Family: none) | | | |
| WO | 2017/195251 | A1 | 16 November 2017 | US | 2019/0145802 | A1 | |
| | | | | EP | 3457377 | A1 | |
| | | | | CN | 109074724 | A | |
| US | 2009/0151619 | A1 | 18 June 2009 | GB | 2427030 | A | |
| | | | | WO | 2006/043078 | A1 | |
| | | | | CN | 101044375 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020183886 A